# EUROPEAN PATENT APPLICATION

(11) **EP 1 882 968 A1**
(43) Date of publication of application: **30.01.2008**
(21) Application number: 06746555.9
(22) Date of filing: 17.05.2006
(51) Int. Cl.: G02B 21/00, G02B 21/06

(54) **POLARIZATION MICROSCOPE**

(30) Priority: 18.05.2005 JP 2005145928
(71) Applicant: Olympus Corporation, Tokyo 151-0072 (JP)
(72) Inventor: SAITO, Yoshiharu, 1920031 (JP); TAKATSUKA, Hirofumi, 1910041 (JP); NAKASHO, Eiji, 18015 (US)
(74) Representative: von Hellfeld, Axel
(86) International application number: PCT/JP2006/309852
(87) International publication number: WO 2006/123712

(57) **Abstract**

It in an object to acquire a high-precision polarization image. Provided is a polarization microscope comprising an illumination optical system 3 including a light source, a polarizer for converting a polarization state of illumination light from the light source, and a condenser lens for condensing the illumination light transmitted through the polarizer onto a specimen; an image-acquisition optical system including an objective lens for collecting observation light from the specimen, an analyzer for converting a polarization state of the observation light collected by the objective lens, and an image-acquisition device for acquiring the observation light transmitted through the analyzer; an observation-light angle correcting element for correcting changes in rotation angle of a polarization plane of the observation light in the image-acquisition optical system; and an observation-light phase-difference correcting element for correcting changes in phase difference between P-polarization and S-polarization of the observation light in the image-acquisition optical system, wherein amounts of correction of these correcting elements vary in directions intersecting an optical axis.

## Description

### Technical Field

The present invention relates to a polarization microscope.

### Background Art

In a known polarization microscope in the related art, polarized light, to which a predetermined polarization state is applied by transmitting light emitted from a light source through a polarizer, is radiated onto a specimen, and of the reflected light or transmitted light from the specimen, only the light that is transmitted through an analyzer is acquired (for example, see Patent Document 1). The polarizer and analyzer are generally aligned so that their transmission directions are orthogonal (crossed-Nicol alignment).

In such a polarization microscope, when no specimen is disposed, theoretically, none of the light can pass through the analyzer, and the viewing field becomes black. Then, when a specimen is disposed, due to differences in birefringence and orientation at each part of the specimen, light having different polarization states is transmitted through the analyzer and is acquired. As a result, it is possible to visualize the tissue structure of the specimen from the acquired image.

In practice, however, a condenser lens for condensing light onto the specimen and an objective lens for collecting light from the specimen are complex optical systems. Therefore, even though the transmission directions of the polarizer and the analyzer are orthogonal to each other, a situation occurs where the viewing field does not turn black.

More specifically, first, when the condenser lens or the objective lens has high magnification, the lens curvature is large, the refraction angle at the surface thereof is also large, and the rotation angle of the polarization plane thus increases as the light goes further from the optical axis. Thus, of the light passing through at the edge of the lens, light that would not originally have been transmitted through the analyzer is transmitted through the analyzer, resulting in the problem that the extinction ratio deteriorates.
Second, because an anti-reflection coating is applied to the lens surfaces of the condenser lens and the objective lens, a phase difference between P-polarization and S-polarization is caused by multiple reflections occurring at the coating surface, and linearly polarized light thus changes to elliptically polarized light. Accordingly, the extinction ratio deteriorates.

In order to overcome these problems, in Patent Document 1, a liquid crystal element is disposed in the light path from the polarizer to the analyzer, and the polarization characteristics of the liquid crystal element are changed by control means.

In addition, the related art in Patent Document 1 discloses providing a polarization correcting device, in which a rectifier and a half-wave plate are combined, for correcting the respective polarization characteristics of the condenser lens and the objective lens.
Because the total refractive power of the rectifier is made zero with a pair of lenses having strong refracting surfaces, it is possible to correct the respective polarization-plane rotations produced in the condenser lens and the objective lens.
Patent Document 1: Japanese Unexamined Patent Application, Publication No. 2001-356276.

### Disclosure of Invention

However, although correction of the polarization-plane rotation angle is possible with the polarization correcting element formed by combining a rectifier and a half-wave plate, there is a drawback in that it is not possible to correct changes in the phase difference between the P-polarization and the S-polarization.
Therefore, when observing and analyzing a specimen at the molecular level with the polarization microscope in Patent Document 1, there is a drawback in that it is not possible to obtain a polarization image representing the tissue structure of the specimen with good precision.

The present invention has been conceived in light of the circumstances described above, and an object thereof is to provide a polarization microscope that can obtain a high-precision polarization image.

In order to realize the object described above, the present invention provides the following solutions.
A first aspect of the present invention is a polarization microscope comprising an illumination optical system including a light source, a polarizer for converting a polarization state of illumination light from the light source, and a condenser lens for condensing the illumination light transmitted through the polarizer onto a specimen; an image-acquisition optical system including an objective lens for collecting observation light from the specimen, an analyzer for converting a polarization state of the observation light collected by the objective lens, and an image-acquisition device for acquiring the observation light transmitted through the analyzer; an observation-light angle correcting element for correcting changes in rotation angle of a polarization plane of the observation light in the image-acquisition optical system; and an observation-light phase-difference correcting element for correcting changes in phase difference between P-polarization and S-polarization of the observation light in the image-acquisition optical system, wherein amounts of correction of the observation-light angle correcting element and the observation-light phase-difference correcting element vary in directions intersecting an optical axis.

According to the first aspect of the present invention, in the illumination optical system, when illumination light emitted from the light source is converted to a predetermined polarization state by being transmitted through the polarizer and is focused on the specimen by the condenser lens, observation light is generated at the specimen. The generated observation light is collected by the objective lens in the image-acquisition optical system, its polarization state is converted by the analyzer, and it is acquired by the image-acquisition device.

In this case, according to the first aspect of the present invention, because the observation light from the specimen is made to pass through the observation-light phase-difference correcting element and the observation-light angle correcting element, changes in the rotation angle of the polarization plane and in the phase difference between the P-polarization and the S-polarization are corrected, and the observation light is acquired by the image-acquisition device. As a result, even if changes occur in the rotation angle of the polarization plane and in the phase difference between the P-polarization and the S-polarization in the image-acquisition optical system, including the objective lens, observation light in which those changes are corrected is acquired by the image-acquisition device. Therefore, the extinction ratio is improved, and it is thus possible to obtain a clear, high-precision polarization image.

Because not only changes in the rotation angle of the polarization plane but also changes in the phase difference between the P-polarization and the S-polarization can be corrected, it is possible to coat an anti-reflection film on the surfaces of the lenses and so on constituting the illumination optical system and the image-acquisition optical system, which allows a low-noise, bright polarization image to be obtained.
Furthermore, it is possible to properly correct for the amounts of change in the polarization-plane rotation angle and the phase difference between the P-polarization and the S-polarization, which differ in the directions intersecting the optical axis.

The aspect described above preferably further comprises an illumination-light angle correcting element for correcting changes in rotation angle of a polarization plane of the illumination light in the illumination optical system; and an illumination-light phase-difference reducing means for reducing changes in phase difference between P-polarization and S-polarization of the illumination light in the illumination optical system.
By doing so, the rotation angle of the polarization plane is corrected by transmitting the illumination light from the light source through the illumination-light angle correcting element. In addition, the illumination light from the light source is radiated onto the specimen either without causing any changes, or after correcting changes, in the phase difference between the P-polarization and the S-polarization by operating the illumination-light phase-difference reducing means. As a result, illumination light in which changes in the rotation angle of the polarization plane and changes in the phase difference between the P-polarization and the S-polarization are reduced in the illumination optical system, including the condenser lens, is radiated onto the specimen. Therefore, it is possible to radiate excitation light with uniform polarization states at every position on the specimen.

In the aspect described above, the illumination-light phase-difference reducing means may be configured by making a numerical aperture of the illumination light incident on the specimen smaller than a numerical aperture of the observation light emitted from the specimen.
By doing so, it is possible to suppress the amount of change in the phase difference in the illumination light, and it is thus possible to readily irradiate the specimen with illumination light having reduced phase-difference variation.

In the aspect described above, the illumination-light phase-difference reducing means may be formed of a condenser lens that does not have an anti-reflection coating.
By doing so, it is possible to suppress the amount of change in the phase difference in the illumination light, and it is thus possible to readily irradiate the specimen with illumination light having reduced phase-difference variation.

In the aspect described above, the illumination-light phase-difference reducing means may be formed of an illumination-light phase-difference correcting element for correcting changes in phase-difference between the P-polarization and the S-polarization of the illumination light in the illumination optical system; and the amounts of correction of the illumination-light angle correcting element and the illumination-light phase-difference correcting element may vary in the directions intersecting the optical axis.
By doing so, the specimen is irradiated with illumination light in which changes in rotation angle of the polarization plane and changes in phase difference between the P-polarization and the S-polarization are reduced in the illumination optical system, including the condenser lens. Therefore, it is possible to radiate excitation light with uniform polarization states at every position on the specimen, and it is thus possible to generate observation light under the same conditions. Therefore, in situations such as observing and analyzing the specimen at the molecular level, it is possible to irradiate each molecule with uniform illumination light, which allows a clear, high-precision polarization image to be obtained.

In the aspect described above, the illumination-light angle correcting element and the illumination-light phase-difference correcting element are preferably located substantially at a pupil position of the condenser lens.
By doing so, it is possible to perform proper correction not only for on-axis illumination light but also for off-axis illumination light.

In the aspect described above, the observation-light angle correcting element and the observation-light phase-difference correcting element are preferably located substantially at a pupil position of the objective lens.
By doing so, it is possible to perform proper correction not only for on-axis observation light but also for off-axis observation light.

In the aspect described above, each correcting element is preferably formed of a photonic crystal or a liquid crystal element.
By forming each correction element of these elements, it is possible to effectively correct for changes in the rotation angle of the polarization plane and in the phase difference between the P-polarization and the S-polarization. In addition, because a thin construction is possible with these elements, the system can be made more compact. In particular, with photonic crystals, it is possible to improve the resistance to temperature, humidity, and shock.

A second aspect of the present invention is a polarization microscope comprising an illumination optical system including a light source, a polarizer for converting a polarization state of illumination light from the light source, and a condenser lens for condensing the illumination light transmitted through the polarizer onto a specimen; an image-acquisition optical system including an objective lens for collecting observation light from the specimen, an analyzer for converting a polarization state of the observation light collected by the objective lens, and an image-acquisition device for acquiring the observation light transmitted through the analyzer; and a polarization-correcting element for correcting changes in rotation angle of a polarization plane of the observation light and changes in phase difference between P-polarization and S-polarization of the observation light in the image-acquisition optical system, wherein an amount of correction of the polarization-correcting element varies in directions intersecting the optical axis.

According to the second aspect of the present invention, in the illumination optical system, when illumination light emitted from the light source is converted to a predetermined polarization state by being transmitted through the polarizer and is focused on the specimen by the condenser lens, observation light is generated at the specimen. The generated observation light is collected by the objective lens in the image-acquisition optical system, its polarization state is converted by the analyzer, and it is acquired by the image-acquisition device.

In this case, according to the second aspect of the present invention, because the observation light from the specimen is made to pass through the polarization correcting element, changes in the rotation angle of the polarization plane and in the phase difference between the P-polarization and the S-polarization are corrected, and the observation light is acquired by the image-acquisition device. As a result, even if changes occur in the rotation angle of the polarization plane and in the phase difference between the P-polarization and the S-polarization in the image-acquisition optical system, including the objective lens, observation light in which those changes are corrected is acquired by the image-acquisition device. Therefore, the extinction ratio is improved, and it is thus possible to obtain a clear, high-precision polarization image.

Because not only changes in the rotation angle of the polarization plane but also changes in the phase difference between the P-polarization and the S-polarization can be corrected, it is possible to coat an anti-reflection film on the surfaces of the lenses and so on constituting the illumination optical system and the image-acquisition optical system. As a result, it is possible to obtain a low-noise, bright polarization image.
Furthermore, it is possible to properly correct for the amounts of change in the polarization-plane rotation angle and the phase difference between the P-polarization and the S-polarization, which differ in the directions intersecting the optical axis.

The present invention afford an advantage in that it is possible to obtain a high-precision polarization image, and it is possible to observe polarized light with a high extinction ratio.

### Brief Description of Drawings

[Fig. 1] Fig. 1 is a diagram showing, in outline, the overall configuration of a polarization microscope according to a first embodiment of the present invention.
[Fig. 2] Fig. 2 is a diagram for explaining changes in the rotation angle of the polarization plane and changes in the phase difference between P-polarization and S-polarization which excitation light or fluorescence experiences while passing through a condenser lens or an objective lens in Fig. 1.
[Fig. 3] Fig. 3 is a diagram showing the overall configuration of a first modification of the polarization microscope in Fig. 1.
[Fig. 4] Fig. 4 is a diagram showing the overall configuration of a second modification of the polarization microscope in Fig. 1.
[Fig. 5] Fig. 5 is a diagram showing the overall configuration of a third modification of the polarization microscope in Fig. 1.
[Fig. 6] Fig. 6 is a diagram showing the overall configuration of a fourth modification of the polarization microscope in Fig. 1.
[Fig. 7] Fig. 7 is a diagram showing, in outline, the overall configuration of a polarization microscope according to a second embodiment of the present invention.
[Fig. 8] Fig. 8 is a diagram for explaining a method of correcting the polarization state in the polarization microscope in Fig. 7.
[Fig. 9] Fig. 9 is a diagram showing an example of an observation-light retarder used in the correction method in Fig. 8.
[Fig. 10] Fig. 10 is a diagram showing an example of a crossed-Nicol analyzer used with the observation-light retarder in Fig. 9.
[Fig. 11] Fig. 11 is a diagram showing a parallel-Nicol analyzer used with the observation-light retarder in Fig. 9.
[Fig. 12] Fig. 12 is a diagram showing a modification of the polarization microscope in Fig. 7.
[Fig. 13] Fig. 13 is a diagram showing a design for simplifying the analyzer.

### Best Mode for Carrying Out the Invention

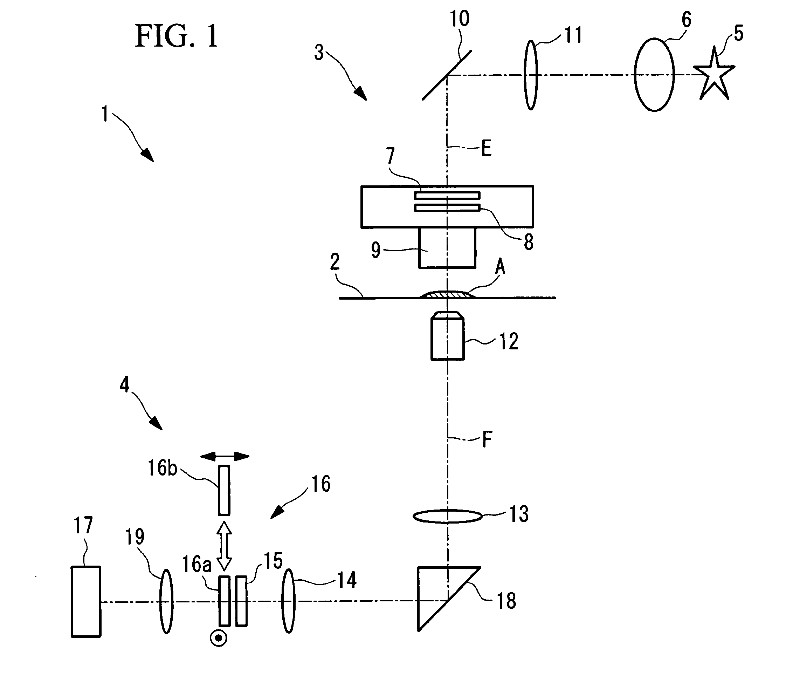

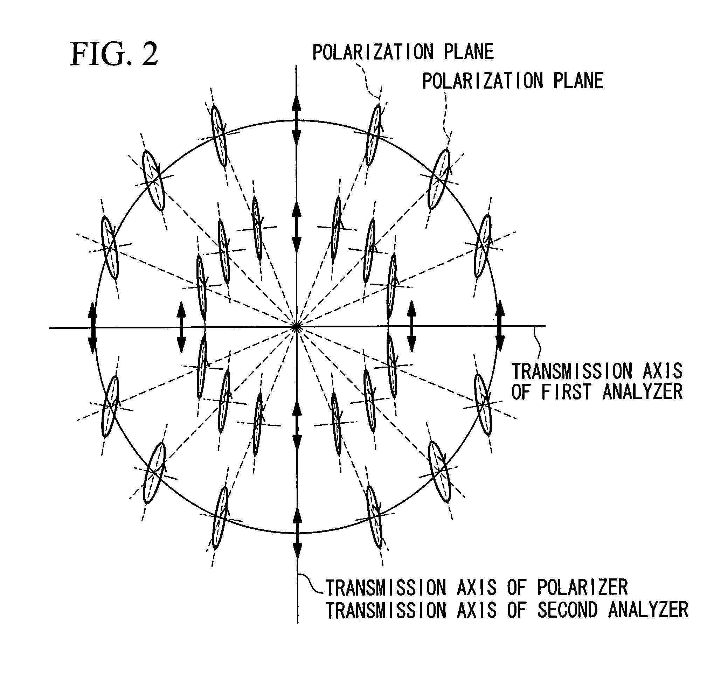

A polarization microscope 1 according to a first embodiment of the present invention will be described below with reference to Fig. 1 and Fig. 2.
As shown in Fig. 1, the polarization microscope 1 according to this embodiment includes a stage 2 for mounting a specimen A, an illumination optical system 3 disposed above the stage 2, and an image-acquisition optical system 4 disposed below the stage 2.

The illumination optical system 3 includes a light source 5 for emitting illumination light E, a collector lens 6 for collecting the illumination light E from the light source 5, a polarizer 7 through which the collected illumination light E is passed to convert the polarization state thereof to linearly polarized light, an illumination-light retarder 8 through which is passed the illumination light E passing through the polarizer 7 to correct the polarization state thereof, and a condenser lens 9 for condensing the illumination light E passing through the illumination-light retarder 8 onto the specimen A. In the drawing, reference numeral 10 is a mirror and reference numeral 11 is a relay lens.

The illumination-light retarder 8 is formed, for example, of a photonic crystal. The photonic crystal is a multidimensional periodic refractive index structure with submicron period, and by adjusting the pattern thereof, it is possible to correct for changes in rotation angle of the polarization plane and in phase difference between the P-polarization and S-polarization of the illumination light E passing therethrough. In this embodiment, it is configured so as to be capable of correcting for changes in the rotation angle of the polarization plane and in the phase difference between the P-polarization and the S-polarization of the illumination light E in the entire illumination optical system, including the condenser lens 9.

The amounts of change in the rotation angle of the polarization plane and in the phase difference between the P-polarization and the S-polarization of the illumination optical system 3 vary in directions intersecting the optical axis. Therefore, the illumination-light retarder 8 also has different amounts of correction in the directions intersecting the optical axis so as to be able to correct for that variation at all positions. Constructing the illumination-light retarder 8 having a different amount of correction in the directions intersecting the optical axis using photonic crystals can be achieved, for example, by arranging minute photonic crystals having different amounts of correction for polarization angle changes and for phase difference changes in a matrix. Instead of arranging them in a matrix, it is also possible to form an integrated photonic crystal so that the amount of correction continuously varies in the directions intersecting the optical axis.

The polarization direction of the illumination light E is aligned in one direction merely by passing through the polarizer 7. However, when passing through the other lenses in the illumination optical system 3, particularly the condenser lens 9, the polarization direction rotates and the ratio of P-polarization and S-polarization also changes. Therefore, when the illumination-light retarder 8 is not disposed, the illumination light E irradiating the specimen A travels along the optical axis, as shown in Fig. 2, and in the direction parallel to the polarization direction of the polarizer 7 and the direction orthogonal thereto, the polarization direction of the illumination light E becomes aligned linearly polarized light; the illumination light E in regions outside this becomes elliptically polarized light containing P-polarization and S-polarization, and the long-axis angle and the oblateness thereof differ from position to position.

According to this embodiment, because the amount of correction of the illumination-light retarder 8 has a distribution which differs in the directions intersecting the optical axis, by transmitting the illumination light E through the illumination-light retarder 8, the rotation angle of the polarization plane, in other words the orientation of the long-axis direction of the ellipse, is corrected, and the phase difference between the P-polarization and the S-polarization, in other words, the oblateness of the elliptically polarized light, is corrected. As a result, uniform illumination light E in which the rotation angle of the polarization plane and the phase difference between the P-polarization and the S-polarization are aligned is radiated onto the specimen at all positions.
In addition, the illumination-light retarder 8 is located at the entrance pupil position of the condenser lens 9.

The image-acquisition optical system 4 includes an objective lens 12 for collecting light (observation light) F coming from the specimen A, an image-forming lens 13 for focusing the observation light F collected by the objective lens 12 to form an intermediate image, a pupil-relay lens 14 for collecting the observation light F forming the intermediate image to convert it to substantially collimated light, an observation-light retarder 15 through which the substantially collimated observation light F passes to correct the polarization state thereof, an analyzer 16 having a predetermined transmission axis, and a cooled CCD (image-acquisition device) 17. Reference numeral 18 in the drawing is a prism, and reference numeral 19 is a TV lens.

The observation-light retarder 15 is also formed, for example, of photonic crystals. By adjusting the pattern thereof, it is configured so as to be capable of correcting for changes in the rotation angle of the polarization plane and in the phase difference between the P-polarization and the S-polarization of the observation light F in the entire image-acquisition optical system 4, including the objective lens 12. The amount of correction in the observation-light retarder 15, like the illumination-light retarder 8, also has a distribution that differs in the directions intersecting the optical axis so that it can correct at all positions in the directions intersecting the optical axis.

The analyzer 16 includes a first analyzer 16a having a transmission axis orthogonal to the transmission axis of the polarizer 7 and a second analyzer 16b having a transmission axis parallel to the transmission axis of the polarizer 7, which can be exchanged with each other. By obtaining an intensity difference or intensity ratio of an image acquired with the analyzer 16a disposed on the optical axis (crossed Nicol arrangement) and an image acquired with the analyzer 16b disposed on the optical axis (parallel Nicol arrangement), it is possible to detect changes at the molecular level in the specimen.
The analyzer 16 is located at a conjugate position with respect to the pupil position of the objective lens 12, which is relayed by the pupil-relay lens 14.

The operation of the polarization microscope 1 according to this embodiment, with the above configuration, will now be described.
After the illumination light E emitted from the light source is collected by the collector lens 6 and relayed by the relay lens 11, it is reflected by the mirror 10 and transmitted through the polarizer 7 to form the linearly polarized illumination light E having a predetermined polarization direction. Then, after being transmitted through the illumination-light retarder 8, the illumination light E is condensed by the condenser lens 9 and is radiated onto the specimen A on the stage 2.

With the polarization microscope 1 according to this embodiment, even if the rotation angle of the polarization plane and the phase difference between the P-polarization and the S-polarized of the illumination light E to be radiated onto the specimen A change as a result of passing through the condenser lens 9, that change is corrected in advance by transmitting it through the illumination-light retarder 8. Therefore, it is radiated onto the specimen A as linearly polarized light whose polarization directions are uniformly aligned. In particular, because the amount of correction of the illumination-light retarder 8 of the present invention is distributed to match the rotation angle and phase difference which vary by different amounts in the optical-axis direction, it is possible to correct for changes in rotation angle and phase difference at all positions in the transverse cross-section of the beam of illumination light E. Therefore, it is possible to achieve uniform illumination conditions at each position on the specimen A.

After the observation light F generated at the specimen A is collected by the objective lens 12, it forms in intermediate image upon passing through the image-forming lens 13. Then, the observation light F forming the intermediate image is reflected by the prism 18, is relayed by the pupil-relay lens 14, and is incident on the first analyzer 16a after being transmitted through the observation-light retarder 15, and only the observation light F passing through the first analyzer 16a is acquired by the cooled CCD 17, via the TV lens 19. In this case, while the observation light F passes through the objective lens 12, changes in the rotation angle of its polarization plane and in the phase difference between the P-polarization and the S-polarization are produced. With this embodiment, however, the changes in rotation angle and phase difference thereof are corrected by the observation-light retarder 15.

The amount of correction of the observation-light retarder 15, like the illumination-light retarder 8, is distributed to match the rotation angle and phase difference which vary by different amounts in the optical-axis direction. Therefore, it is possible to correct for the changes in rotation angle and phase difference at all positions in the transverse cross-section of the beam of observation light F. Therefore, it is possible to achieve the correct crossed-Nicol arrangement of the polarizer 7 and the first analyzer 16a, and changes in the rotation angle of the polarization plane and in the phase difference due to transmission through the condenser lens 9 and the objective lens 12 are corrected, which enables detection of only the observation light F whose polarization-plane rotation angle and phase difference have changed at the specimen A. As a result, it is possible to acquire a low-noise, high-resolution, clear polarization image.

In addition, with the polarization microscope 1 according to this embodiment, not only changes in the rotation angle of the polarization plane but also changes in the phase difference between the P-polarization and the S-polarization are corrected by the illumination-light retarder 8 and the observation-light retarder 15. Therefore, it is possible to coat the optical systems, such as the condenser lens 9, the objective lens 12, and so forth, with an anti-reflection layer, which enables noise to be reduced further and makes it possible to acquire a bright polarization image.

With the polarization microscope 1 according to this embodiment, because the illumination-light retarder 8 and the observation-light retarder 15 are formed of photonic crystals, the space occupied can be reduced, making the system more compact. In addition, it is also possible to improve the resistance to temperature, humidity, and shocks.
With the polarization microscope 1 according to this embodiment, the illumination-light retarder 8 and the observation-light retarder 15 are located at the pupil position, or a position conjugate thereto, of the condenser lens 9 and the objective lens 12, respectively. Therefore, it is possible to reliably correct for changes in rotation angle and phase difference not only in the on-axis illumination light E and observation light F, but also in the off-axis illumination light E and observation light F.

In this embodiment, the illumination-light retarder 8 and the observation-light retarder 15 are formed of photonic crystals. Instead of this, however, they may be formed of liquid crystal elements.
A structure for simultaneously correcting for changes in the rotation angle of the polarization plane and the phase difference between the P-polarization and S-polarization has been given as an example of the illumination-light retarder 8 and the observation-light retarder 15; however, they may be provided separately.

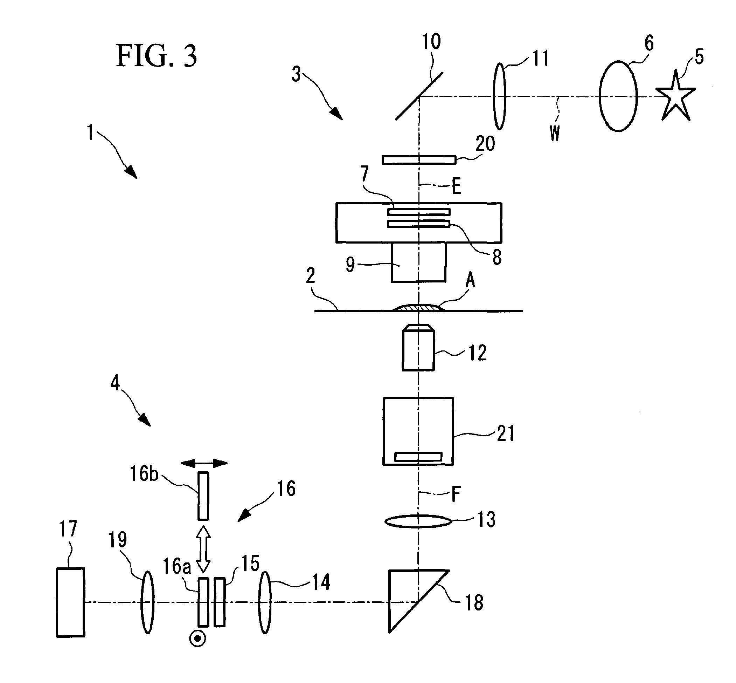

As the light source 5, a case using the light source 5 that emits illumination light E is described above; however, as the light source 5, a device that emits excitation light E, or as shown in Fig. 3, a device that emits white light W, may be used, the excitation light E may be selectively radiated onto the specimen A using an excitation filter 20, and fluorescence F emitted from the specimen A may be observed.
In such a case, an absorption filter 21 for preventing the excitation light E transmitted through the specimen A from being incident on the cooled CCD 17 is preferably disposed in the image-acquisition optical system 3.

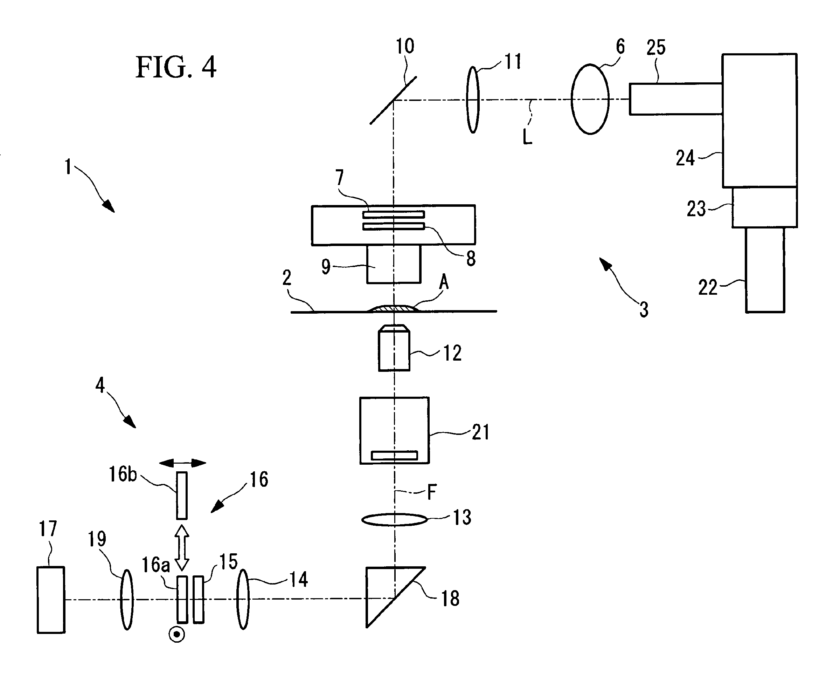

As shown in Fig. 4, a laser light source 22 may be used as the light source. Reference numeral 23 in the drawing is a laser modulator, and reference numeral 24 is a speckle elimination device. Because laser light L has a small beam diameter and high intensity, it can be guided by an optical fiber 25 or a fiber bundle.

The case including the exchangeable first analyzer 16a and second analyzer 16b, serving as the analyzer 16, has been described. Instead of this, however, a single analyzer may be supported so as to be rotatable about the optical axis. Accordingly, it is possible to perform observation in the crossed-Nicol state and the parallel-Nicol state without using the two kinds of analyzers 16a and 16b.

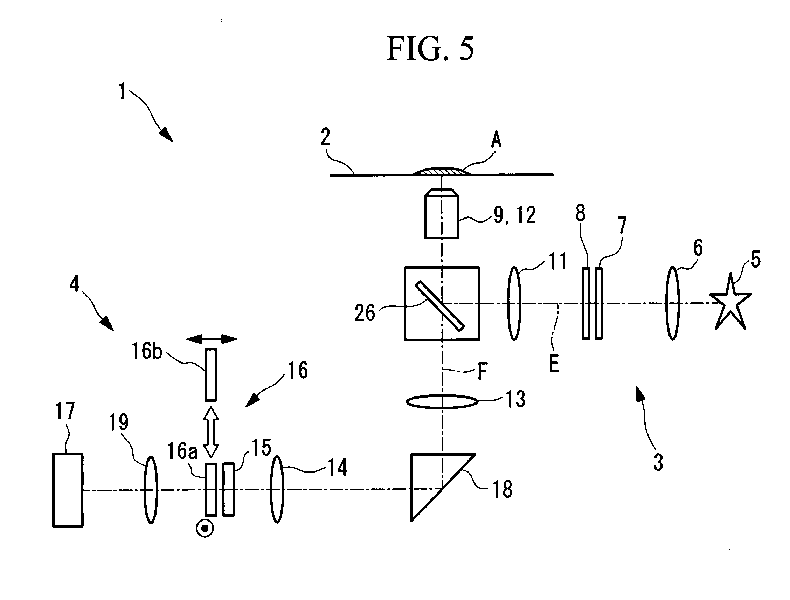

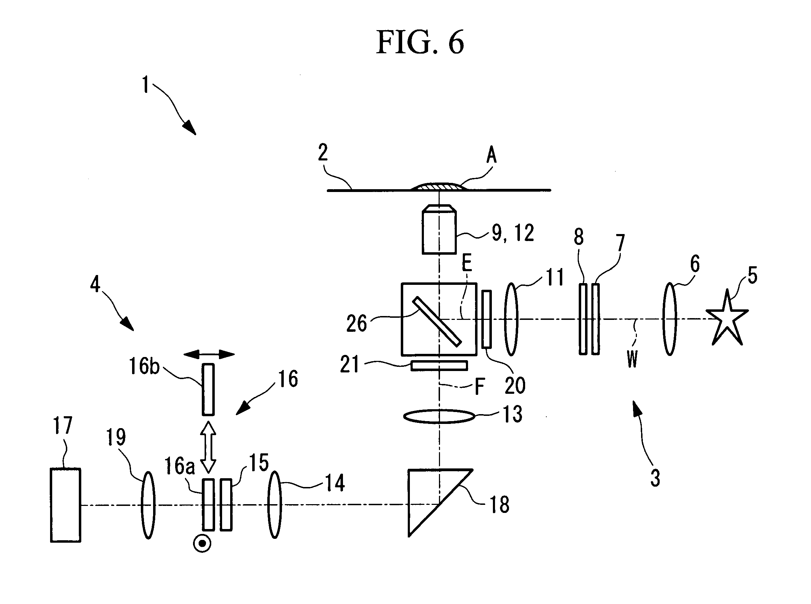

The transmission-illumination-type polarization microscope 1 has been illustrated in the embodiment described above; instead of this, however, it is possible to construct an epi-illumination-type polarization microscope 1, as shown in Figs. 5 and 6. Reference numeral 26 in the drawings is a half mirror, and the objective lens 12 and the condenser lens are combined.

It is also possible to use gratings or liquid-crystal elements as the polarizer 7 and the analyzer 16. However, forming them of photonic crystals is advantageous because it is possible to achieve space saving and higher resistance.

In the embodiment described above, changes in the phase difference of the illumination light E or excitation light E radiated onto the specimen A are corrected by the illumination-light retarder 8. Instead of this, however, rather than providing the illumination-light retarder 8, it is possible to use illumination-light phase-difference reducing means for reducing the changes in phase difference in the illumination light E. Examples of the illumination-light phase-difference reducing means include sufficiently reducing the numerical aperture of the illumination light E radiated onto the specimen A and not applying an anti-reflection coating to the illumination optical system, including the condenser lens. By adopting these illumination-light phase-difference reducing means, when the intensity of the illumination light E radiated onto the specimen A drops, it is possible to correct for this by increasing the intensity of the light source 5.

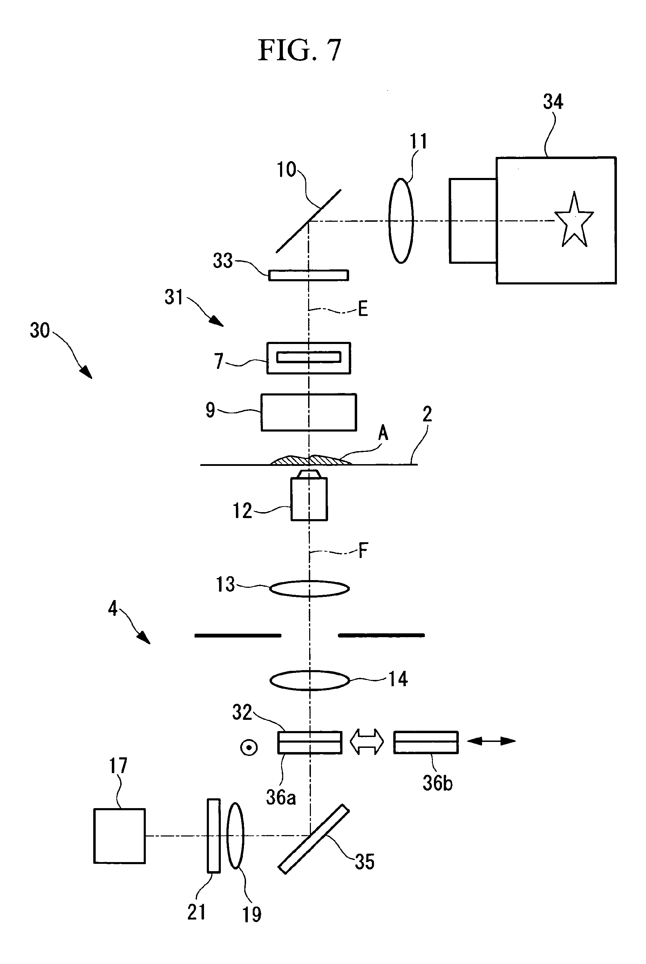

Next, a polarization microscope 30 according to a second embodiment of the present invention will be described below with reference to Figs. 7 to 10.
In this embodiment, parts that are common to the configuration of the polarization microscope 1 according to the first embodiment described above are assigned the same reference numerals, and a description thereof is omitted here.

The polarization microscope 30 according to this embodiment, in which the numerical aperture of the illumination light E radiating the specimen A is made sufficiently small, does not include the illumination-light retarder 8 in an illumination optical system 31, as shown in Fig. 7. Another difference is that the prism 18 and the absorption filter 21, which have reflecting surfaces that deteriorate the polarization state before correction by an observation-light retarder 32, are not provided. Reference numeral 33 in the drawing is an excitation filter for extracting excitation light E from light from a light source 34, which is formed of a halogen lamp. Reference numeral 35 is a mirror.

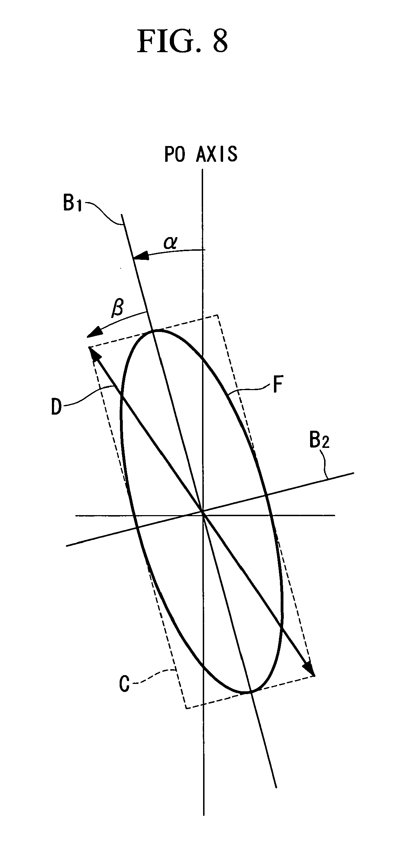

In the polarization microscope 30 according to this embodiment, respective observation retarders 32 are aligned with a first analyzer 36a for crossed-Nicol and a second analyzer 36b for parallel-Nicol.
Here, the construction of the observation-light retarders 32 and the analyzers 36a and 36b is described with reference to Figs. 8 to 10.

As described above, as shown in Fig. 2, the observation light F also has different polarization states which are distributed in directions intersecting the optical axis. Thus, in order to correct this, the observation-light retarders 32 and the analyzers 36a and 36b in this embodiment have the following construction.
Specifically, at any point in the directions intersecting the optical axis, the rotation angle of the polarization plane and the ratio of the phase difference between the P-polarization and the S-polarization change, and the observation light F becomes elliptically polarized light with a predetermined oblateness and whose long axis B₁ and short axis B₂ are tilted by angle α, as shown in Fig. 8.

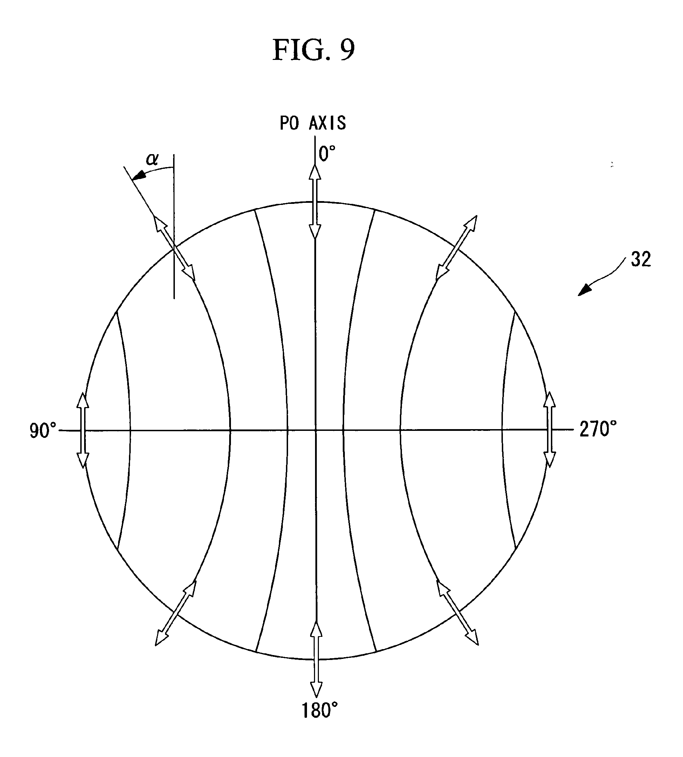

First, therefore, the observation-light retarder 32 is formed of a quarter-wave plate, and the phase-advance axis thereof is made coincident with the long axis B₁ of the elliptically polarized light in Fig. 8. Accordingly, the phase difference between the P-polarization and S-polarization becomes substantially 0°, and the observation light F becomes linearly polarized light whose polarization plane is aligned along diagonal D of a rectangle C whose edges are defined by the long axis B₁ and the short axis B₂ of the ellipse.
The observation-light retarder 32 in this embodiment is also formed of a photonic crystal, and as shown in Fig. 9, the crystal pattern is adjusted at all positions in the directions intersecting the optical axis to implement the correction described above.

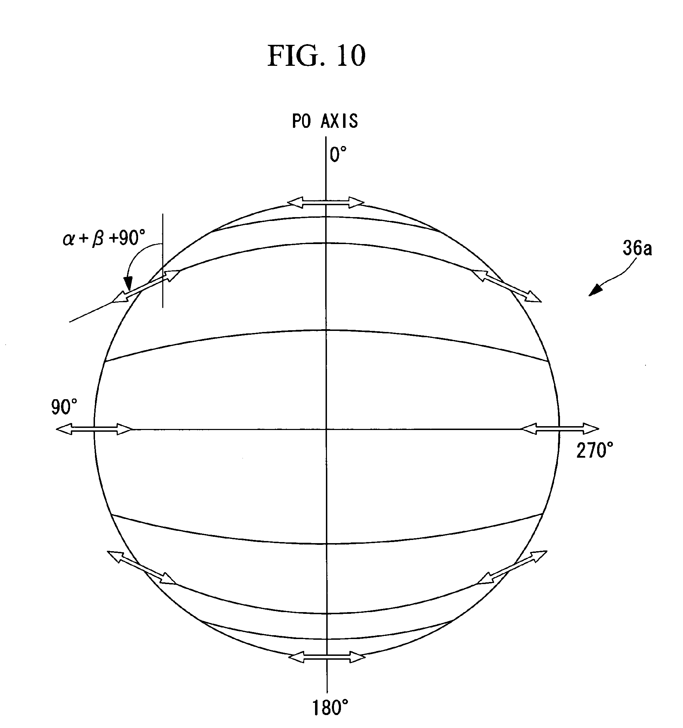

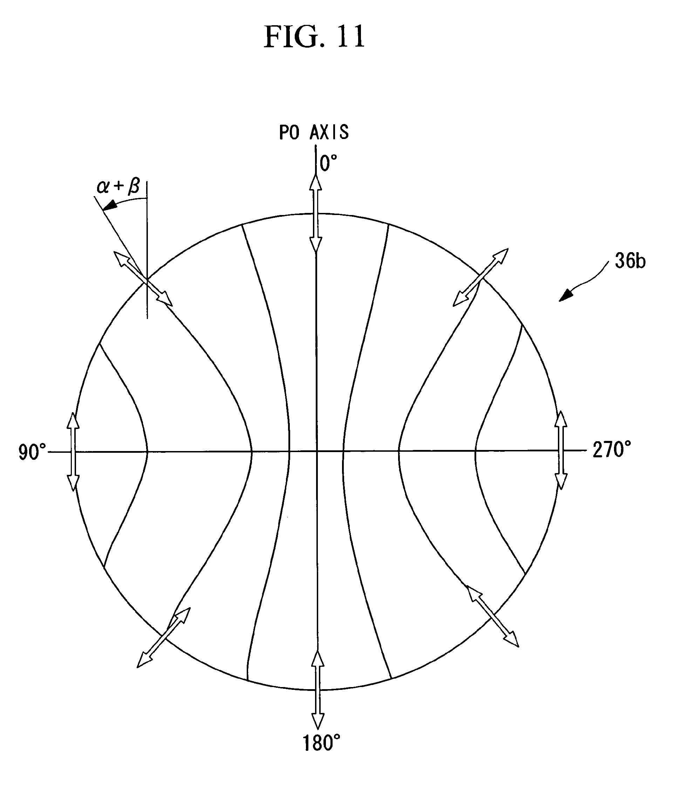

An analyzer having a transmission axis orthogonal to the polarization direction of the observation light F after passing through the observation-light retarder 32 is used as the first analyzer 36a, and an analyzer having a transmission axis parallel to the polarization direction of the observation light F after passing through the observation-light retarder 32 is used as the second analyzer 36a.
These analyzers 36a and 36b are also formed of photonic crystals, and as shown in Fig. 10 and Fig. 11, the crystal pattern is adjusted at all positions in the directions intersecting the optical axis to satisfy the conditions described above.

With the polarization microscope 30 according to this embodiment, having such a configuration, because the mirror 18 and the absorption filter 21, which deteriorate the polarization state, do not exist between the polarizer 7 and the analyzers 36a and 36b, changes in the polarization-plane rotation angle and phase difference due to transmission through the condenser lens 9 and the objective lens 12 are corrected, noise is reduced, and a high-resolution, clear polarization image can thus be acquired.
Because the observation-light retarders 32 are provided at the first and second analyzers 36a and 36b, respectively, the amount of correction of changes in the polarization-plane rotation angle and phase difference, which is distributed in the directions intersecting the optical axis of the observation-light retarder 32, and the transmission-axis directions of the analyzers 36a and 36b can be kept in correspondence with good accuracy, which allows a higher-resolution, clearer polarization image to be acquired.

The observation-light retarders 32, which are preferably disposed at either the pupil position of the objective lens 12 or at a position conjugate thereto, and the analyzers 36a and 36b are placed close to each other with no gap therebetween, and it is thus possible to align them close to the pupil position or a position conjugate thereto. Therefore, it is possible to achieve proper correction, not only on-axis but also off-axis.

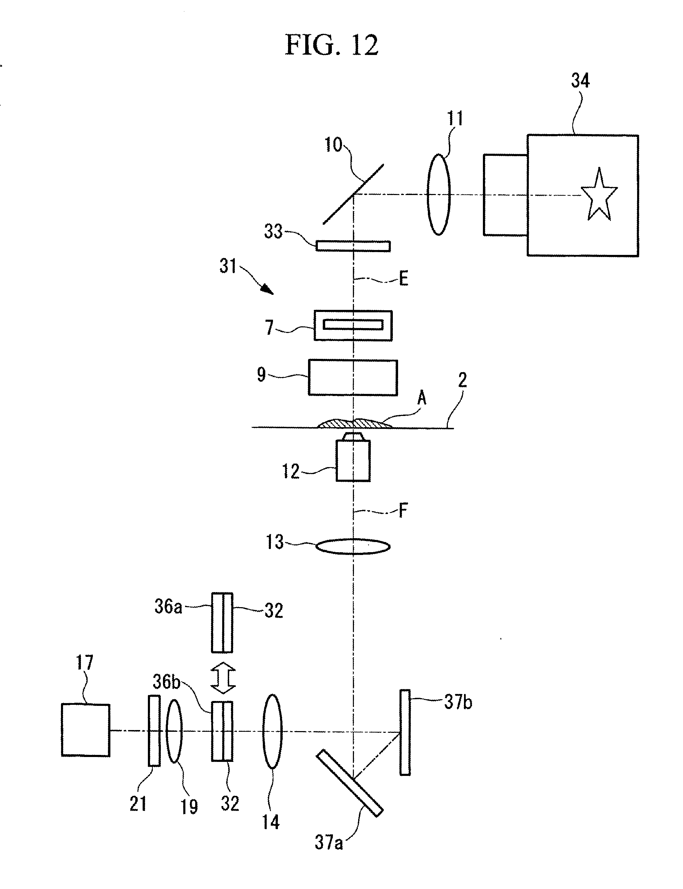

In this embodiment, deterioration of the polarization state is prevented by eliminating the mirror 18 disposed between the polarizer 7 and the analyzers 36a and 36b. Instead of this, however, as shown in Fig. 12, deterioration of the polarization state may be prevented by disposing mirrors 37a and 37b, or a prism (not shown), having multiple reflecting surfaces, and reducing the incident angle of the observation light F on the reflecting surfaces.

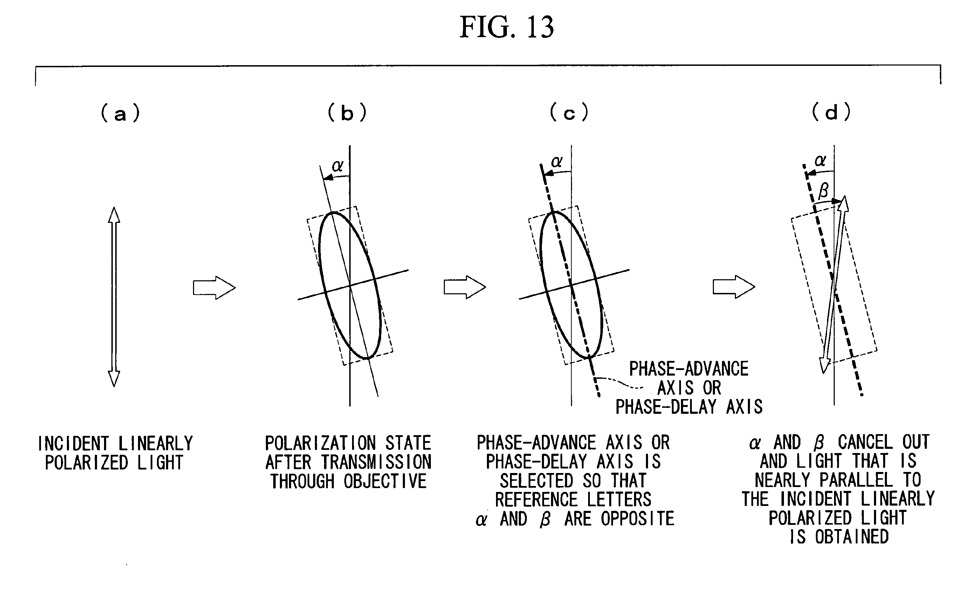

In the polarization microscope 30 according to this embodiment, the observation-light retarder 32 is used to convert to linearly polarized light whose polarization direction differs at each position, and analyzers having transmission axes that differ at each position according to that polarization direction are employed as the analyzers 36a and 36b. Instead of this, however, by designing the observation-light retarder 32 as shown in Fig. 13, it is possible to use an analyzer whose transmission-axis direction is uniform.

In other words, by switching between aligning the phase-advance axis of the observation-light retarder 32, which is formed of a quarter-wave plate, with the direction of the long axis B₁ of the elliptically polarized light, or aligning the phase-delay axis therewith, it is possible to flip the polarization direction of the obtained linearly polarized light with respect to the long axis B₁ of the elliptically polarized light. Therefore, at each position in the directions intersecting the optical axis, by suitably setting the direction of the phase-advance axis or the phase-delay axis to a direction where the inclination angle α of the long axis B₁ of the elliptically polarized light and the inclination angle β of the linear polarization D relative to the long axis B₁ cancel each other, it is possible to convert to linearly polarized light having polarization directions that are substantially parallel at all points.

By doing so, it is possible to realize a crossed-Nicol state and a parallel-Nicol state by using analyzers whose transmission-axis directions are uniform, and it is thus possible to construct a low-cost polarization microscope without using the complex analyzers 36a and 36b.

## Claims

1. A polarization microscope comprising:
an illumination optical system including a light source, a polarizer for converting a polarization state of illumination light from the light source, and a condenser lens for condensing the illumination light transmitted through the polarizer onto a specimen;
an image-acquisition optical system including an objective lens for collecting observation light from the specimen, an analyzer for converting a polarization state of the observation light collected by the objective lens, and an image-acquisition device for acquiring the observation light transmitted through the analyzer;
an observation-light angle correcting element for correcting changes in rotation angle of a polarization plane of the observation light in the image-acquisition optical system; and
an observation-light phase-difference correcting element for correcting changes in phase difference between P-polarization and S-polarization of the observation light in the image-acquisition optical system,
wherein the amounts of correction of the observation-light angle correcting element and the observation-light phase-difference correcting element vary in directions intersecting an optical axis.

2. A polarization microscope according to Claim 1, further comprising:
an illumination-light angle correcting element for correcting changes in rotation angle of a polarization plane of the illumination light in the illumination optical system; and
an illumination-light phase-difference reducing means for reducing changes in phase difference between P-polarization and S-polarization of the illumination light in the illumination optical system.

3. A polarization microscope according to Claim 2, wherein the illumination-light phase-difference reducing means is configured by making a numerical aperture of the illumination light incident on the specimen smaller than a numerical aperture of the observation light emitted from the specimen.

4. A polarization microscope according to Claim 2, wherein the illumination-light phase-difference reducing means is formed of a condenser lens that does not have an anti-reflection coating.

5. A polarization microscope according to Claim 2, wherein:
the illumination-light phase-difference reducing means is formed of an illumination-light phase-difference correcting element for correcting changes in phase-difference between the P-polarization and the S-polarization of the illumination light in the illumination optical system; and
the amounts of correction of the illumination-light angle correcting element and the illumination-light phase-difference correcting element vary in the directions intersecting the optical axis.

6. A polarization microscope according to Claim 5, wherein the illumination-light angle correcting element and the illumination-light phase-difference correcting element are located substantially at a pupil position, or at a position conjugate thereto, of the condenser lens.

7. A polarization microscope according to one of Claims 1 to 6, wherein the observation-light angle correcting element and the observation-light phase-difference correcting element are located substantially at a pupil position, or at a position conjugate thereto, of the objective lens.

8. A polarization microscope according to one of Claims 1 to 7, wherein each correcting element is formed of a photonic crystal or a liquid crystal element.

9. A polarization microscope comprising:
an illumination optical system including a light source, a polarizer for converting a polarization state of illumination light from the light source, and a condenser lens for condensing the illumination light transmitted through the polarizer onto a specimen;
an image-acquisition optical system including an objective lens for collecting observation light from the specimen, an analyzer for converting a polarization state of the observation light collected by the objective lens, and an image-acquisition device for acquiring the observation light transmitted through the analyzer; and
a polarization-correcting element for correcting changes in rotation angle of a polarization plane of the observation light and changes in phase difference between P-polarization and S-polarization of the observation light in the image-acquisition optical system,
wherein an amount of correction of the polarization-correcting element varies in directions intersecting the optical axis.
